(19) Europäisches Patentamt
European Patent Office
Office européen des brevets

(11) **EP 3 413 663 B1**

(12) **EUROPEAN PATENT SPECIFICATION**

(45) Date of publication and mention
of the grant of the patent:
**03.11.2021 Bulletin 2021/44**

(51) Int Cl.:
*H04W 72/06* (2009.01)
*H04W 84/12* (2009.01)
*H04W 16/10* (2009.01)
*H04W 16/14* (2009.01)
*H04W 24/02* (2009.01)

(21) Application number: **17175291.8**

(22) Date of filing: **09.06.2017**

(54) **SELECTION OF AN OPTIMAL COMMUNICATION CHANNEL OF AN ACCESS POINT**

AUSWAHL EINES OPTIMALEN KOMMUNIKATIONSKANALS EINES ZUGANGSPUNKTES

SÉLECTION D'UN CANAL DE COMMUNICATION OPTIMALE D'UN POINT D'ACCÈS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.12.2018 Bulletin 2018/50**

(73) Proprietor: **Nokia Solutions and Networks Oy 02610 Espoo (FI)**

(72) Inventors:
• **Atawia, Ramy**
**2018 Antwerpen (BE)**
• **Gacanin, Haris**
**2018 Antwerpen (BE)**

(74) Representative: **IP HILLS NV Hubert Frère-Orbanlaan 329 9000 Gent (BE)**

(56) References cited:
**WO-A1-2014/057138    US-A1- 2013 035 128**

• **MING YU ET AL: "An adaptive radio resource management technique for APs in WLANs", NETWORKS, 2004. (ICON 2004). PROCEEDINGS. 12TH IEEE INTERNATIONAL CONF ERENCE ON SINGAPORE 16-19 NOV. 2004, PISCATAWAY, NJ, USA,IEEE, US, 16 November 2004 (2004-11-16), pages 85-91, XP010777419, DOI: 10.1109/ICON.2004.1409095 ISBN: 978-0-7803-8783-6**
• **Matthias Ihmig ET AL: "Distributed Dynamic Channel Selection in Chaotic Wireless Networks", , 2 April 2007 (2007-04-02), XP055230131, Retrieved from the Internet: URL:http://confs.comelec.telecom-paristech .fr/ EW2007/papers/1569014922.pdf [retrieved on 2015-11-20]**
• **CHIEOCHAN S ET AL: "Channel assignment schemes for infrastructure-based 802.11 WLANs: A survey", IEEE COMMUNICATIONS SURVEYS AND TUTORIALS, INSTITUTE OF ELECTRICAL AND ELECTRONICS ENGINEERS, US, vol. 12, no. 1, 1 January 2010 (2010-01-01), pages 124-136, XP011303075, ISSN: 1553-877X**

**Description**

**Technical Field**

The present invention generally relates to the selection of a communication channel of an access point in a wireless communication network from a set of communication channels. More particular, the disclosure relates to the use-case where the wireless communication network overlaps with a neighbouring unmanaged wireless communication network.

**Background**

With the increasing demand for throughput and coverage, the amount of indoor wireless access points has been rapidly increasing. Together with this increase, the concept of managed wireless access points and managed wireless networks has emerged. Within such a managed network, the configuration of the access points is managed centrally to optimize the throughput and/or coverage of the complete wireless network. A typical example of this is the selection of the optimal communication channel for each access point taking into account the possible interference between access points.

One problem that may arise is the presence of unmanaged access points that can interfere with the managed access points. Therefore, existing approaches take into account the presence of neighbouring unmanaged access points and networking nodes when determining their optimal configuration. For this, they may rely on channel measurements performed by the managed access points, for example based on RSSI values, load values and the channels used by these unmanaged access points. An overview of existing solution is discussed by Chieochan et al in "Channel assignment schemes for infrastructure-based 802.11 WLANs: A survey.", IEEE Communications Surveys & Tutorials 12.1 (2010).

The publication titled "An adaptive radio resource management technique for APs in WLANs" published in PROCEEDINGS of the 12TH IEEE INTERNATIONAL CONFERENCE ON NETWORKS, pages 85-91 on 16 November 2004 discloses an adaptive RRM technique for a multiple APs network. First, a real-time algorithm to estimate the number of active stations from the standpoint of an AP, instead of a station is developed. Second, an adaptive RRM algorithm that not only significantly increases network performance but also reduces the cochannel interference is proposed. Third, the optimal switching probability that can minimize the transient time for an AP to reach the equilibrium state is deduced.

**Summary**

A problem with the above approach is that, when the configuration of a managed access point is changed with performance improvement in mind, the neighbouring unmanaged access point may react on this change by changing its own configuration which leads on its turn to less performance improvement than expected or even to a loss of performance. In the end, this may lead to an oscillating behaviour where both managed and unmanaged access point continuously change their configuration. Such behaviour is undesirable because it leads to service interruptions and thus a lower Quality of Service, QoS, for the user and it leads to longer reconfiguration times in general.

It is an object of the present disclosure to solve the above identified problem and to provide a solution for determining an optimal configuration of an access point that will minimize such oscillating behaviour but will directly result in the most optimal configuration.

This object is achieved, according to a first aspect, by the device according to claim 1.

In other words, the device will first learn how the neighbouring network will react when switching to each of the communication channels by determining for each communication channel the probability that the neighbouring will switch to one of the other communication channels. By the use of a probabilistic measure, the device also anticipates the non-deterministic behaviour in wireless networks. For each combination, i.e., a potential communication channel from the set for the access point and a potential communication channel from the set for the neighbouring access point, the device also calculates the gain associated with the configuration change. Based on both this gain and the probability, the device then selects the optimal channel to switch to.

It is thus an advantage that the device will anticipate on the possible reaction of the neighbouring access point and take this reaction into account for determining the optimal configuration, i.e., the optimal channel to switch to. Moreover, by using probabilities, the device can also make sure that the gain will have a high change of being achieved. In other words, oscillating behaviour is avoided and a reconfiguration will have a high change of achieving the foreseen gain.

The wireless communication network and neighbouring wireless communication network may for example be Wi-Fi communication networks. The device may then correspond to a network controller that is connected to the managed access points, either wirelessly or wired.

According to an embodiment, the learning module is further configured to determine the probability by switching the access point repeatedly to the first channel and measuring a selected channel of the neighbouring network.

The learning module thus determines the probabilities for all combinations based on actual tests and measurements. This results in an accurate estimate of the probabilities. The more the switching is repeated the more accurate the probabilities will become.

According to an embodiment, the learning module is further configured to determine for each combination the probability at different time slots, and to determine therefrom, for each combination of sequences of channels selected at the different time slots, a sequence probability that, when the access point selects a first sequence of the combination, the neighbouring wireless network will select a second sequence of the combination. The performance module is then further configured to determine, for each combination of sequences, a total performance metric indicative for a total gain obtained by switching the communication channel of the access point according to the first sequence. The selection module is then further configured to select an optimal sequence of channels for the access point based on the determined total performance metric and the determined sequence probability of each combination of sequences of channels.

By the reactive behaviour of the neighbouring network, it may be possible that, by changing again the channel of the managed access point, an additional gain may again be achieved. Another possibility is that a first switch to a less optimal channel may afterwards lead to the possibility to switch to a channel that results in an overall performance increase. In other words, by considering that a path or sequence of channel switches may be performed, the memory effect that is inherently present in the channel switching of the neighbouring access point is also anticipated for. This results in an even higher possible performance increase that might not have been possible by a single switch of the communication channel.

There are different possibilities for the performance metric depending on the use-case and depending on what is considered a loss or gain in performance. The total performance metric may for example be based on at least one of the group consisting of:

- a total number of channel switches according to the first sequence; and
- an average throughput in the wireless network according to the first sequence; and
- an average delay in wireless network according to the first sequence; and
- an average interference between the wireless network and other wireless networks according to the first sequence.

According to a preferred embodiment, the selection module is further configured to select the optimal sequence by selecting the sequence with a highest total performance metric which has at least a minimum sequence probability.

This way, the determined performance gain has a high chance of actually being achieved.

According to a second aspect, the disclosure relates to the computer-implemented method according to claim 7.

According to a third aspect, the disclosure relates to a computer program product comprising computer-executable instructions for performing the method according to the second aspect when the program is run on a device as disclosed in claim 1.

According to a fourth aspect, the disclosure relates to a computer readable storage medium comprising the computer program product according to the third aspect.

## Brief Description of the Drawings

Fig. 1 illustrates two managed and one unmanaged wireless communication networks and a device for selecting an optimal channel of the managed networks according to an embodiment of the invention; and

Fig. 2 illustrates a device for selecting an optimal channel of an access point according to an embodiment of the invention; and

Fig. 3 illustrates steps performed for selecting an optimal channel of an access point according to an embodiment of the invention; and

Fig. 4 illustrates steps performed for determining channel sequence probabilities according to an embodiment of the invention; and

Fig. 5 illustrates a suitable computing system for performing steps according to various embodiments of the invention.

**Detailed Description of Embodiment(s)**

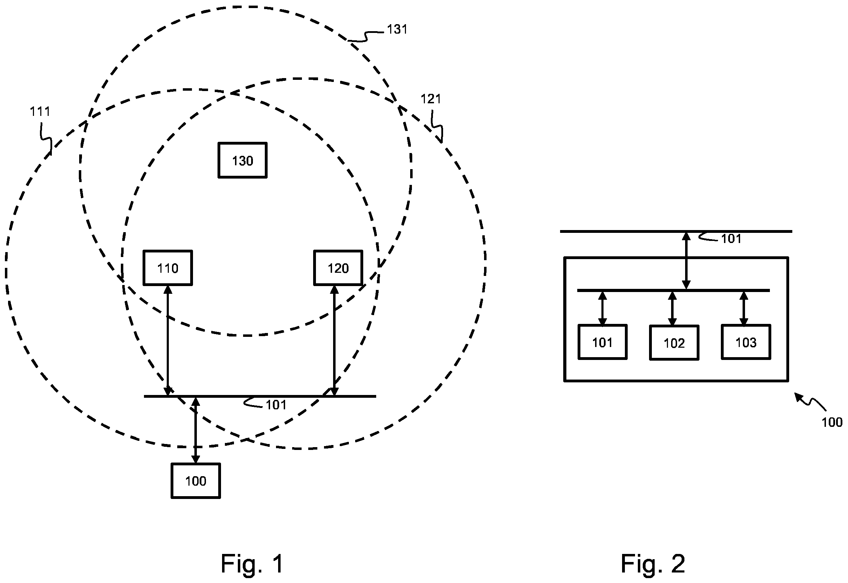

The present invention generally relates to the selection of a communication channel of an access point in a wireless communication network from a set of communication channels. Fig. 1 illustrates three exemplary wireless communication networks by the dashed lines 111, 121, 131. Each network is operated by a respective access point 110, 120, 130. Access points 110 and 120 are managed access points, i.e., access points 110 and 120 are dynamically configurable by device 100 in order to optimize the overall performance of networks 111 and 121. The performance may for example be defined in terms of throughput to and from the users, in terms of coverage, in terms of maximal number of supported users etc. Access point 130 is an unmanaged access in view of access points 110 and 120, i.e., an access point which is not controlled by device 100. Wireless network 131 is in the vicinity of managed networks 111 and 121 such that it interferes with the managed networks, i.e., the configuration of access point 130 has an influence on the performance of managed networks 111 and 121.

According to a preferred embodiment, the access point and thus the wireless networks are operable according to the IEEE 802.11 Wireless LAN (WLAN) standard. Device 100 may then adapt the configuration of access points 110, 120 over wired network 101, for example over a wired ethernet backbone of the access points.

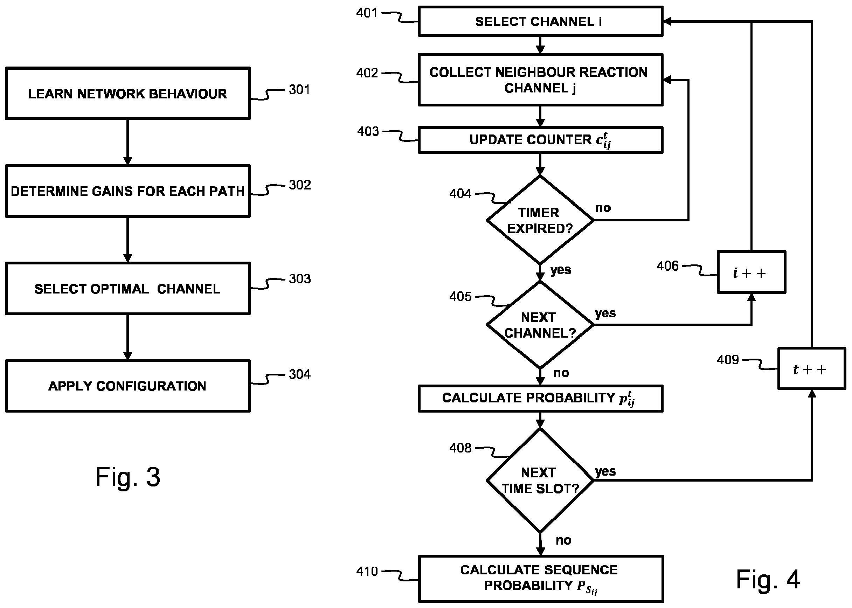

Device 100 is configured to select the optimal, i.e. best performing, communication channel of networks 111, 121. Fig. 2 illustrates a more detailed view of device 100 according to an embodiment of the invention. Device 100 comprises a learning module 101 for learning the behaviour of network 111 or 121 that is under influence of network 131, a performance module 102 for determining the performance of network 111 and 121 when changing the communication channel configuration of access points 110 or 120, and a selection module for deriving and selecting the optimal channel based on the learned behaviour and determined performance. The functionality of the different modules and interaction between them will be shown by the flow diagrams of Fig. 3 and Fig. 4 wherein the steps of flow diagrams are performed by the various modules 101, 102, 103.

Fig. 3 illustrates steps performed by device 100 for selecting the optimal communication channel of access point 110 or 120 according to an embodiment of the invention. In a first step 301, learning module 101 learns the network behaviour, i.e. how the neighbouring and interfering wireless network 131 reacts when the channel configuration of the access point 110 or 120 is changed. More particular, the learning is done in a probabilistic way because the neighbouring network may react differently on changing the channel of access point 110 or 120.

Fig. 4 illustrates different steps performed for learning the network behaviour according to a further embodiment of the invention. These steps are based on learning the probability $p_{ij}$ that the neighbouring access point 130 and thus network 131 will reconfigure to channel $j$ at a certain time slot when managed access point 110 selects channel $i$. Channels $i$ and $j$ are thus a combination of channels from a set of channels that are selectable by both access points 110 and 130. More particular, step 301 will determine a probability that the neighbouring network 131 will follow a certain sequence of channel changes for a given sequence of communication channel changes of access point 110 and thus communication network 111.

At the first step 401, the learning module 101 configures access point 110 to communicate over channel $i = 1$ from a total amount of $N$ communication channels at a first time slot $t = 1$ from a total amount of $T$ time slots. Together with the configuration, module 101 also starts a time for a predefined duration which is less than the duration of the time slot $t$. Learning module 101 then proceeds to the next step 402 where it determines the reaction of the neighbouring access point 130 by monitoring to which channel this access point switches or if it doesn't switch at all. The channel to which the neighbouring access point 130 switches is further denoted as channel $j$. Thereupon, the learning module increments a counter $c_{ij}$ which is initialized at zero and which is dedicated to each possible combination of channel $i$ and $j$. Then, learning module 101 proceeds to step 404 and checks if the timer set at the predefined duration has already lapsed. If not, module 101 returns and repeats steps 402, 403 and 404 wherein the counters $c_{ij}^{t}$ are again updated. If time slot $t = 1$ has lapsed, then module 101 verifies whether there is another possible channel $i$ from the set of $N$ channels in step 405. If so, the next channel is selected by incrementing channel $i$ in step 406 and module 101 returns to step 401 for which steps 401 to 405 are repeated for a next channel of access point 110. When all $N$ channels have been processed, module 101 proceeds from step 405 to step 407. In this step, module 101 calculates the probability $p_{ij}^{t}$ for the current time slot $t$ as

$$p_{ij}^{t} = c_{ij}^{t} \Big/ \sum_{j} c_{ij}^{t}$$

. Thereupon, module 101 proceeds to step 408 where it verifies whether there is another time slot $t$. If so, module 101 increments to the next time slot in step 409 and returns to step 401 to calculate the probability $p_{ij}^{t}$ for this next time slot. If there are no remaining time slots in step 408, then module 101 proceeds to step 408 and calculates the sequence probability as $P_{S_{ij}} = \prod_t p_{ij}^t$ wherein $S_{ij}$ is a sequence of channel changes by access point 110 during all time slots $T$ characterized by a sequence of combinations as defined by $p_{ij}^t$ for each time slot $t$.

Step 410 is the last substep of step 301 and thus concludes the learning procedure 301 of learning module 101. Step 301 may be repeated at regular times intervals, e.g. once an hour or once a day, thereby updating the sequence probabilities $P_{S_{ij}}$. The time slots may be chosen arbitrarily depending on the use case. For example, six time slots of ten minutes may be selected resulting in a total learning procedure of one hour which can again be repeated at arbitrary time intervals.

For a given set of sequence probabilities $P_{S_{ij}}$, performance module 102 then calculates the performance gain or loss $G_{ij}$ when a certain sequence $S_{ij}$ is followed. The performance gain (which is a loss when it has an opposite sign) may be based on different performance parameters such as for example:

- The number of channel switches $M_{ij}$ when following a certain channel switching sequence $S_{ij}$
- The average gain in throughput $R_{ij}$ and delay $D_{ij}$
- The average interference $I_{ij}$ or contention $U_{ij}$ caused in the other managed wireless networks

The total gain may then be expressed by a combination of the above performance parameters:

$$G_{ij} = {-M_{ij}}\big/{T} + {R_{ij}}\big/{R_{max}} - {D_{ij}}\big/{D_{max}} - {I_{ij}}\big/{I_{max}} - {U_{ij}}\big/{U_{max}}$$

When a performance parameter has a negative contribution to the total performance, it has a negative sign and when a performance parameter has a positive contribution to the total performance, it has a positive sign. The performance parameter is further normalized by dividing it through its maximum value.

When the gains $G_{ij}$ have been determined for each path in step 302, the performance module 102 provides these gains to selection module 103, which, on its turn, proceeds to step 303. In this step, the selection module 103 determines the most optimal channel for access point 110 based on the sequence probabilities $P_{S_{ij}}$ and related gains $G_{ij}$ for each sequence $S_{ij}$. The selection is based on a balance between the sequence probability and accompanying gain. In particular, the sequence that has a high probability and gain is preferred over a path that has a high probability and very low gain. On the other hand, a sequence with low probability but with a high gain is preferred over a sequence with low probability and low gain. Mathematically, this strategy may be expressed by the optimization function $max\{G_{ij}\}$ while $P_{S_{ij}} > P_{min}$, i.e. to select the sequence of channels with a maximum gain $G_{ij}$, but with a sequence probability that is higher than a predetermined minimum sequence probability. This way it can be ascertained that the intended gain will be achieved by a certain probability.

Selection module 103 then proceeds to step 304 and applies the determined optimal channel to access point 110.

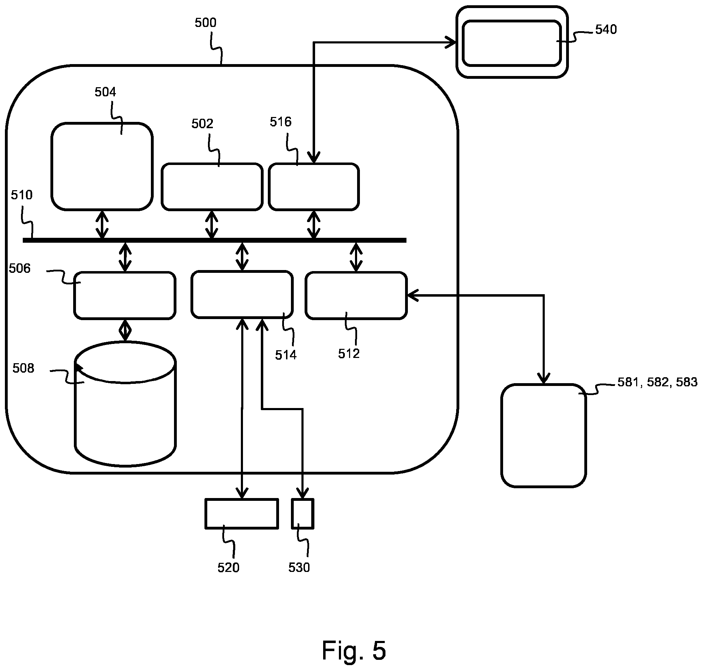

Fig. 5 shows a suitable computing system 500 according to an embodiment of the invention. Computing system 500 is suitable for performing the steps by learning module 101, performance module 102 and selection module 103. Computing system 500 may therefore serve as a suitable implementation of device 100. Computing system 500 may in general be formed as a suitable general purpose computer and comprise a bus 510, a processor 502, a local memory 504, one or more optional input interfaces 514, one or more optional output interfaces 516, a communication interface 512, a storage element interface 506 and one or more storage elements 508. Bus 510 may comprise one or more conductors that permit communication among the components of the computing system 500. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator to input information to the computing device 500, such as a keyboard 520, a mouse 530, a pen, voice recognition and/or biometric mechanisms, etc. Output interface 516 may comprise one or more conventional mechanisms that output information to the operator, such as a display 540, etc. Communication interface 512 may comprise any transceiver-like mechanism such as for example one or more Ethernet interfaces that enables computing system 500 to communicate with other devices and/or systems, for example with managed access points 110 and 120. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used. The system 500 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A device (100, 500) for selecting a communication channel of an access point (110, 120) managed by the device (100, 500) in a wireless communication network (111, 121) from a set of communication channels; wherein the wireless communication network overlaps with a neighbouring wireless communication network (131) not managed by the device (100, 500); **characterized in that** the device comprises:

   - a learning module (101) configured to determine (301), for each combination of channels in the set, a probability that, when the access point switches to a first channel of the combination, an access point of the neighbouring network will reconfigure to a second channel of the combination; and
   - a performance module (102) configured to determine (302), for each combination of channels in the set, a performance metric indicative for a gain obtained by switching the communication channel of the access point to the first channel; and
   - a selection module (103) configured to select (303) an optimal communication channel for the access point based on the determined performance metric and the determined probability of each combination.

2. The device (100, 500) according to claim 1 wherein the wireless communication network (111, 121) and neighbouring wireless communication (131) network are Wi-Fi communication networks.

3. The device (100, 500) according to claim 1 wherein the learning module (101) is further configured to determine the probability by switching (401) the access point repeatedly to the first channel and measuring (402) a selected channel of the neighbouring network.

4. The device (100, 500) according to claim 1 wherein:

   - the learning module (101) is further configured to determine for each combination the probability at different time slots (408), and to determine (410) therefrom, for each combination of sequences of channels selected at the different time slots, a sequence probability that, when the access point selects a first sequence of the combination, the neighbouring wireless network will select a second sequence of the combination; and
   - the performance module (102) is further configured to determine (302), for each combination of sequences, a total performance metric indicative for a total gain obtained by switching the communication channel of the access point according to the first sequence; and
   - the selection module (103) is further configured to select an optimal sequence of channels for the access point based on the determined total performance metric and the determined sequence probability of each combination of sequences of channels.

5. Device (100, 500) according to claim 4 wherein the total performance metric is based on at least one of the group consisting of:

- a total number of channel switches according to the first sequence; and
- an average throughput in the wireless network according to the first sequence; and
- an average delay in wireless network according to the first sequence; and
- an average interference between the wireless network and other wireless networks according to the first sequence.

6. Device (100, 500) according to claim 4 wherein the selection module (103) is further configured to select the optimal sequence by selecting the sequence with a highest total performance metric which has at least a minimum sequence probability.

7. A computer-implemented method performed by a device (100, 500) for selecting a communication channel of an access point (110, 120) managed by the device (100, 500) in a wireless communication network (111, 121) from a set of communication channels; wherein the wireless communication network overlaps with a neighbouring wireless communication network (131) not managed by the device (100, 500); **characterized in that** the method comprises the following steps:

- determining (301) (403), for each combination of channels in the set, a probability that, when the access point switches to a first channel of the combination, an access point of the neighbouring network will reconfigure to a second channel of the combination; and
- determining (302), for each combination of channels in the set, a performance metric indicative for a gain obtained by switching the communication channel of the access point to the first channel; and
- selecting (303) an optimal communication channel for the access point based on the determined performance metric and the determined probability of each combination.

8. A computer program product comprising computer-executable instructions for performing the method according to claim 7 when the program is run on a device (100, 500).

9. A computer readable storage medium comprising the computer program product according to claim 8.

**Patentansprüche**

1. Vorrichtung (100, 500) zum Auswählen eines Kommunikationskanals eines Zugangspunkts (110, 120), der von der Vorrichtung (100, 500) verwaltet wird, in einem drahtlosen Kommunikationsnetzwerk (111, 121) aus einem Satz von Kommunikationskanälen; wobei sich das drahtlose Kommunikationsnetzwerk mit einem benachbarten drahtlosen Kommunikationsnetzwerk (131), das nicht von der Vorrichtung (100, 500) verwaltet wird, überlappt; **dadurch gekennzeichnet, dass** die Vorrichtung Folgendes umfasst:

- ein Lernmodul (101), das dazu ausgelegt ist, für jede Kombination von Kanälen im Satz eine Wahrscheinlichkeit, dass, wenn der Zugangspunkt auf einen ersten Kanal der Kombination umschaltet, ein Zugangspunkt des benachbarten Netzwerks auf einen zweiten Kanal der Kombination neu ausgelegt wird, zu bestimmen (301); und
- ein Leistungsmodul (102), das dazu ausgelegt ist, für jede Kombination von Kanälen im Satz eine Leistungsmetrik, die eine Verstärkung anzeigt, die durch Umschalten des Kommunikationskanals des Zugangspunkts auf den ersten Kanal erhalten wird, zu bestimmen (302); und
- ein Auswahlmodul (103), das dazu ausgelegt ist, auf Basis der bestimmten Leistungsmetrik und der bestimmten Wahrscheinlichkeit jeder Kombination einen optimalen Kommunikationskanal für den Zugangspunkt auszuwählen (303).

2. Vorrichtung (100, 500) nach Anspruch 1, wobei das drahtlose Kommunikationsnetzwerk (111, 121) und das benachbarte drahtlose Kommunikationsnetzwerk (131) Wi-Fi-Kommunikationsnetzwerke sind.

3. Vorrichtung (100, 500) nach Anspruch 1, wobei das Lernmodul (101) ferner dazu ausgelegt ist, die Wahrscheinlichkeit durch wiederholtes Umschalten (401) des Zugangspunkts auf den ersten Kanal und Messen (402) eines ausgewählten Kanals des benachbarten Netzwerks zu bestimmen.

4. Vorrichtung (100, 500) nach Anspruch 1, wobei:

   - das Lernmodul (101) ferner dazu ausgelegt ist, für jede Kombination die Wahrscheinlichkeit in verschiedenen Zeitschlitzen (408) zu bestimmen und daraus für jede Kombination von Sequenzen von Kanälen, die in den verschiedenen Zeitschlitzen ausgewählt werden, eine Sequenzwahrscheinlichkeit, dass, wenn der Zugangspunkt eine erste Sequenz der Kombination auswählt, das benachbarte drahtlose Netzwerk eine zweite Sequenz der Kombination auswählt, zu bestimmen (410); und
   - das Leistungsmodul (102) ferner dazu ausgelegt ist, für jede Kombination von Sequenzen eine gesamte Leistungsmetrik zu bestimmen (302), die eine Gesamtverstärkung anzeigt, die durch Umschalten des Kommunikationskanals des Zugangspunkts gemäß der ersten Sequenz erhalten wird; und
   - das Auswahlmodul (103) ferner dazu ausgelegt ist, auf Basis der bestimmten gesamten Leistungsmetrik und der bestimmten Sequenzwahrscheinlichkeit jeder Kombination von Sequenzen von Kanälen eine optimale Sequenz von Kanälen für den Zugangspunkt auszuwählen.

5. Vorrichtung (100, 500) nach Anspruch 4, wobei die gesamte Leistungsmetrik auf mindestens einem der Gruppe basiert, die aus Folgendem besteht:

   - einer Gesamtzahl von Kanalumschaltungen gemäß der ersten Sequenz und
   - einem durchschnittlichen Durchsatz im drahtlosen Netzwerk gemäß der ersten Sequenz und
   - einer durchschnittlichen Verzögerung im drahtlosen Netzwerk gemäß der ersten Sequenz und
   - einer durchschnittlichen Interferenz zwischen dem drahtlosen Netzwerk und anderen drahtlosen Netzwerken gemäß der ersten Sequenz.

6. Vorrichtung (100, 500) nach Anspruch 4, wobei das Auswahlmodul (103) ferner dazu ausgelegt ist, die optimale Sequenz durch Auswählen der Sequenz mit einer höchsten gesamten Leistungsmetrik, die mindestens eine minimale Sequenzwahrscheinlichkeit aufweist, auszuwählen.

7. Computerimplementiertes Verfahren, das von einer Vorrichtung (100, 500) zum Auswählen eines Kommunikationskanals eines Zugangspunkts (110, 120), der von der Vorrichtung (100, 500) verwaltet wird, in einem drahtlosen Kommunikationsnetzwerk (111, 121) aus einem Satz von Kommunikationskanälen durchgeführt wird; wobei sich das drahtlose Kommunikationsnetzwerk mit einem benachbarten drahtlosen Kommunikationsnetzwerk (131), das nicht von der Vorrichtung (100, 500) verwaltet wird, überlappt; **dadurch gekennzeichnet, dass** das Verfahren die folgenden Schritte umfasst:

   - Bestimmen (301) (403) einer Wahrscheinlichkeit, dass, wenn der Zugangspunkt auf einen ersten Kanal der Kombination umschaltet, ein Zugangspunkt des benachbarten Netzwerks auf einen zweiten Kanal der Kombination neu ausgelegt wird, für jede Kombination von Kanälen im Satz und
   - Bestimmen (302) einer Leistungsmetrik, die eine Verstärkung anzeigt, die durch Umschalten des Kommunikationskanals des Zugangspunkts auf den ersten Kanal erhalten wird, für jede Kombination von Kanälen im Satz und
   - Auswählen (303) eines optimalen Kommunikationskanals für den Zugangspunkt auf Basis der bestimmten Leistungsmetrik und der bestimmten Wahrscheinlichkeit jeder Kombination.

8. Computerprogrammprodukt, das computerausführbare Anweisungen zum Durchführen des Verfahrens nach Anspruch 7, wenn das Programm auf einer Vorrichtung (100, 500) ausgeführt wird, umfasst.

9. Computerlesbares Speichermedium, das das Computerprogrammprodukt nach Anspruch 8 umfasst.

**Revendications**

1. Dispositif (100, 500) pour sélectionner un canal de communication d'un point d'accès (110, 120) géré par le dispositif (100, 500) dans un réseau de communication sans fil (111, 121) à partir d'un ensemble de canaux de communication ; dans lequel le réseau de communication sans fil chevauche un réseau de communication sans fil voisin (131) non géré par le dispositif (100, 500) ; **caractérisé en ce que** le dispositif comprend :

- un module d'apprentissage (101) configuré pour déterminer (301), pour chaque combinaison de canaux de l'ensemble, une probabilité que, lorsque le point d'accès commute sur un premier canal de la combinaison, un point d'accès du réseau voisin se reconfigure sur un deuxième canal de la combinaison ; et

- un module de performance (102) configuré pour déterminer (302), pour chaque combinaison de canaux de l'ensemble, une métrique de performance indicative d'un gain obtenu en commutant le canal de communication au point d'accès sur le premier canal ; et

- un module de sélection (103) configuré pour sélectionner (303) un canal de communication optimal pour le point d'accès sur la base de la métrique de performance déterminée et de la probabilité déterminée de chaque combinaison.

2. Dispositif (100, 500) selon la revendication 1, dans lequel le réseau de communication sans fil (111, 121) et le réseau de communication sans fil voisin (131) sont des réseaux de communication Wi-Fi.

3. Dispositif (100, 500) selon la revendication 1, dans lequel le module d'apprentissage (101) est en outre configuré pour déterminer la probabilité en commutant (401) le point d'accès de manière répétée sur le premier canal et en mesurant (402) un canal sélectionné du réseau voisin.

4. Dispositif (100, 500) selon la revendication 1, dans lequel :

- le module d'apprentissage (101) est en outre configuré pour déterminer, pour chaque combinaison, la probabilité au niveau de différents créneaux temporels (408), et pour déterminer (410) à partir de là, pour chaque combinaison de séquences de canaux sélectionnés au niveau des différents créneaux temporels, une probabilité de séquence que, lorsque le point d'accès sélectionne une première séquence de la combinaison, le réseau sans fil voisin sélectionne une deuxième séquence de la combinaison ; et

- le module de performance (102) est en outre configuré pour déterminer (302), pour chaque combinaison de séquences, une métrique de performance totale indicative d'un gain total obtenu en commutant le canal de communication du point d'accès selon la première séquence ; et

- le module de sélection (103) est en outre configuré pour sélectionner une séquence optimale de canaux pour le point d'accès sur la base de la métrique de performance déterminée totale et de la probabilité de séquence déterminée de chaque combinaison de séquences de canaux.

5. Dispositif (100, 500) selon la revendication 4, dans lequel la métrique de performance totale est basée sur au moins un élément du groupe constitué par :

- un nombre total de commutations de canaux selon la première séquence ; et
- un débit moyen dans le réseau sans fil selon la première séquence ; et
- un retard moyen dans le réseau sans fil selon la première séquence ; et
- une interférence moyenne entre le réseau sans fil et d'autres réseaux sans fil selon la première séquence.

6. Dispositif (100, 500) selon la revendication 4, dans lequel le module de sélection (103) est en outre configuré pour sélectionner la séquence optimale en sélectionnant la séquence avec une métrique de performance totale la plus élevée qui a au moins une probabilité de séquence minimale.

7. Procédé mis en œuvre par ordinateur réalisé par un dispositif (100, 500) pour sélectionner un canal de communication d'un point d'accès (110, 120) géré par le dispositif (100, 500) dans un réseau de communication sans fil (111, 121) à partir d'un ensemble de canaux de communication ; dans lequel le réseau de communication sans fil chevauche un réseau de communication sans fil voisin (131) non géré par le dispositif (100, 500) ; **caractérisé en ce que** le procédé comprend les étapes suivantes :

- déterminer (301) (403), pour chaque combinaison de canaux de l'ensemble, une probabilité que, lorsque le point d'accès commute sur un premier canal de la combinaison, un point d'accès du réseau voisin se reconfigure sur un deuxième canal de la combinaison ; et

- déterminer (302), pour chaque combinaison de canaux de l'ensemble, une métrique de performance indicative d'un gain obtenu en commutant le canal de communication du point d'accès sur le premier canal ; et

- sélectionner (303) un canal de communication optimal pour le point d'accès sur la base de la métrique de performance déterminée et de la probabilité déterminée de chaque combinaison.

8. Produit de programme informatique comprenant des instructions exécutables par ordinateur pour réaliser le procédé selon la revendication 7 lorsque le programme est exécuté sur un dispositif (100, 500).

9. Support de stockage lisible par ordinateur comprenant le produit de programme informatique selon la revendication 8.

Fig. 1

Fig. 2

LEARN NETWORK BEHAVIOUR — 301

DETERMINE GAINS FOR EACH PATH — 302

SELECT OPTIMAL CHANNEL — 303

APPLY CONFIGURATION — 304

Fig. 3

401 — SELECT CHANNEL i

402 — COLLECT NEIGHBOUR REACTION CHANNEL j

403 — UPDATE COUNTER $c_{ij}^t$

404 — TIMER EXPIRED?  no

yes

405 — NEXT CHANNEL?  yes

406 — $i++$

no

CALCULATE PROBABILITY $p_{ij}^t$

409 — $t++$

408 — NEXT TIME SLOT?  yes

no

410 — CALCULATE SEQUENCE PROBABILITY $P_{S_{ij}}$

Fig. 4

Fig. 5

EP 3 413 663 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHIEOCHAN et al.** Channel assignment schemes for infrastructure-based 802.11 WLANs: A survey. *IEEE Communications Surveys & Tutorials,* 2010, vol. 12.1

- An adaptive radio resource management technique for APs in WLANs. *PROCEEDINGS of the 12TH IEEE INTERNATIONAL CONFERENCE ON NETWORKS,* 16 November 2004, 85-91